# EUROPEAN PATENT APPLICATION

(11) **EP 4 838 796 A1**
(43) Date of publication of application: **11.11.2026**
(21) Application number: 25751679.9
(22) Date of filing: 07.02.2025
(51) Int. Cl.: H04B 7/0456

(54) **COMMUNICATION METHOD AND APPARATUS**

(30) Priority: 08.02.2024 CN 202410178349
(71) Applicant: Huawei Technologies Co., Ltd., Shenzhen, Guangdong 518129 (CN)
(72) Inventor: WANG, Xiaona, Shenzhen, Guangdong 518129 (CN); LIU, Fengwei, Shenzhen, Guangdong 518129 (CN); YAN, Mao, Shenzhen, Guangdong 518129 (CN)
(74) Representative: Goddar, Heinz J.
(86) International application number: PCT/CN2025/076304
(87) International publication number: WO 2025/168080

(57) **Abstract**

Embodiments of this application provide a communication method and apparatus, to implement reference signal resource configuration and channel state information measurement of a massive MIMO system. **In** the method, a terminal device receives first configuration information, where the first configuration information is used to configure M antenna ports, the M antenna ports are associated with K reference signal resources, both M and K are integers greater than 1, and each of the K reference signal resources corresponds to a same quantity of antenna ports; receives reference signals corresponding to the K reference signal resources, and obtains first channel state information corresponding to the K reference signal resources; and sends the first channel state information.

## Description

### CROSS-REFERENCE TO RELATED APPLICATIONS

This application claims priority to Chinese Patent Application No. 202410178349.8, filed with the China National Intellectual Property Administration on February 8, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a massive (massive) multiple input multiple output (multiple input multiple output, MIMO) system, a base station is usually equipped with a large quantity of antennas, which enable the base station to focus energy of beamforming transmission on a smaller spatial area, thereby providing enhanced throughput and radiation energy efficiency.

The base station may obtain a weighting vector (for example, a transmit beam) for sending a user-level downlink signal in the following two methods: In method 1, in a system in which channel reciprocity exists between uplink and downlink channels, the base station may obtain the weighting vector by receiving and measuring an uplink signal such as a sounding reference signal (sounding reference signal, SRS). In method 2, the base station sends a downlink reference signal (for example, a channel state information reference signal (channel state information reference signal, CSI-RS)) to a terminal device, and the terminal device obtains the weighting vector by receiving and measuring the CSI-RS, and feeds the weighting vector back to the base station. However, in the massive MIMO system, how the terminal device obtains the weighting vector needs to be further studied.

### SUMMARY

Embodiments of this application provide a communication method and apparatus, to implement reference signal resource configuration and channel state information measurement of a massive MIMO system.

According to a first aspect, a communication method is provided. The method may be applied to a terminal side, for example, a terminal device or a communication module in a terminal device, or a circuit or a chip (for example, a modem (modem) chip, also referred to as a baseband (baseband) chip, or a system-on-chip (system-on-chip, SoC) or a system-in-package (system-in-package, SIP) chip including a modem core) responsible for a communication function in a terminal device. For example, the method is applied to the terminal device. In the method, the terminal device receives first configuration information, where the first configuration information is used to configure M antenna ports, the M antenna ports are associated with one or more reference signal resources, and M is a positive integer; receives reference signals corresponding to the M antenna ports, and obtain first channel state information corresponding to the M antenna ports; determines a plurality of pieces of sub-channel information based on the first channel state information, where the plurality of pieces of sub-channel information correspond to the M antenna ports, and each piece of sub-channel information corresponds to a same quantity of antenna ports; determines second channel state information based on the plurality of sub-channel information; and sends the second channel state information.

In this embodiment of this application, the terminal device may obtain, through reconstruction based on the channel information corresponding to the M antenna ports, a weighting vector having the highest matching degree with a channel of the terminal device and corresponding channel state information (namely, the second channel state information), to help improve a data transmission rate and improve communication performance.

In a possible implementation, the terminal device may further receive second configuration information, where the second configuration information is used to configure a first codebook and a second codebook; determining the plurality of pieces of sub-channel information based on the first channel state information includes: determining the plurality of pieces of sub-channel information based on the first codebook and the first channel state information, where a quantity of antenna ports corresponding to each piece of sub-channel information is the same as a quantity of antenna ports corresponding to the first codebook; and determining the second channel state information based on the plurality of pieces of sub-channel information includes: quantizing the plurality of pieces of sub-channel information based on the second codebook to obtain the second channel state information. A base station configures the first codebook and the second codebook for the terminal device, so that the terminal device can sense a correspondence between a physical antenna and an antenna port on a base station side, thereby helping improve precision of quantizing downlink channel state information by the terminal device.

In a possible implementation, quantizing the plurality of pieces of sub-channel information based on the second codebook to obtain the second channel state information includes: obtaining first sub-channel information from each of the plurality of pieces of sub-channel information to obtain a plurality of pieces of first sub-channel information, where the plurality of pieces of first sub-channel information correspond to a plurality of antenna ports, and different antenna ports in the plurality of antenna ports correspond to a same weight of different antenna subarrays; and quantizing the plurality of pieces of first sub-channel information based on the second codebook to obtain the second channel state information. The terminal device obtains, based on the first codebook, a small quantity of pieces of channel information from the channel information corresponding to the M antenna ports, so that complexity of measuring channel state information by the terminal device can be reduced. For example, M=128. For example, if the quantity of antenna ports corresponding to the first codebook is 4, the terminal device may quantize, based on the first codebook, channel information corresponding to the 128 antenna ports to obtain channel state information corresponding to 32 antenna ports, thereby reducing complexity of channel state information measurement.

In a possible implementation, the terminal device may further quantize each of the plurality of pieces of sub-channel information based on the first codebook to obtain a plurality of pieces of second sub-channel information; and quantizing the plurality of pieces of sub-channel information based on the second codebook to obtain the second channel state information includes: quantizing the plurality of pieces of second sub-channel information based on the second codebook to obtain the second channel state information. The terminal device performs first-level quantization on each piece of sub-channel information based on the first codebook to obtain new channel information, and performs second-level quantization on a plurality of pieces of new channel information based on the second codebook to obtain channel state information with high quantization precision.

In a possible implementation, the quantity of antenna ports corresponding to the first codebook is Q1, Q1 is a quantity of all polarized antenna ports, a quantity of antenna ports corresponding to the second codebook is Q2, Q2 is a quantity of all polarized antenna ports, (Q1*Q2)/P=M, P indicates a quantity of polarized antennas, and Q1, Q2, and P are positive integers.

In a possible implementation, the quantity of antenna ports corresponding to the first codebook is Q1, Q1 includes a quantity of all polarized antenna ports, a quantity of antenna ports corresponding to the second codebook is Q2, Q2 is a quantity of antenna ports of same polarization, Q1*Q2=M, P indicates a quantity of polarized antennas, and Q1, Q2, and P are positive integers.

In a possible implementation, the quantity of antenna ports corresponding to the first codebook is Q1, Q1 is a quantity of antenna ports of same polarization, a quantity of antenna ports corresponding to the second codebook is Q2, Q2 is a quantity of antenna ports of same polarization, Q1*Q2*P=M, P indicates a quantity of polarized antennas, and Q1, Q2, and P are positive integers.

In a possible implementation, the M antenna ports are included in N port groups, the N port groups include a first port group, different antenna ports in the first port group correspond to reference signal ports with a same number, and the different antenna ports in the first port group correspond to different reference signal resources; or the N port groups include a second port group, different antenna ports in the second port group correspond to reference signal ports with different numbers, and the different antenna ports in the second port group correspond to a same reference signal resource. The M antenna ports are grouped, so that the terminal device can obtain an antenna-level channel, and channel state information determined by the terminal device based on the antenna-level channel has a high matching degree with the channel of the terminal device.

In a possible implementation, the N port groups correspond to N antenna subarrays, and different ports in a same port group correspond to different weights of a same antenna subarray. A same port group corresponds to different weights of a same subarray, so that the base station can send reference signals through a port group, thereby helping reduce a probability of an antenna port conflict.

In a possible implementation, the M antenna ports correspond to K reference signal resources, the first codebook is used to quantize channel state information corresponding to each of the K reference signal resources, the second codebook is used to quantize channel state information corresponding to the K reference signal resources, and K is a positive integer.

In a possible implementation, the quantity of antenna ports corresponding to the first codebook is Q1, a quantity of antenna ports corresponding to the second codebook is Q2, Q2=K*Q1, and Q1 and Q2 are less than or equal to M.

According to a second aspect, a communication method is provided. The method may be applied to a network side, for example, a base station on the network side or a component (for example, a circuit, a chip, or a chip system) in a base station. For example, the method is applied to the base station. In the method, the base station sends first configuration information, where the first configuration information is used to configure M antenna ports, the M antenna ports are associated with one or more reference signal resources, and M is a positive integer; sends reference signals corresponding to the M antenna ports; and receives second channel state information.

In a possible implementation, the base station may further send second configuration information, where the second configuration information is used to configure a first codebook and a second codebook, the first codebook indicates a quantity of antenna ports corresponding to each antenna subarray, and the second codebook indicates a quantity of antenna subarrays.

In a possible implementation, a quantity of antenna ports corresponding to the first codebook is Q1, Q1 is a quantity of all polarized antenna ports, a quantity of antenna ports corresponding to the second codebook is Q2, Q2 is a quantity of all polarized antenna ports, (Q1*Q2)/P=M, P indicates a quantity of polarized antennas, and Q1, Q2, and P are positive integers.

In a possible implementation, a quantity of antenna ports corresponding to the first codebook is Q1, Q1 includes a quantity of all polarized antenna ports, a quantity of antenna ports corresponding to the second codebook is Q2, Q2 is a quantity of antenna ports of same polarization, Q1*Q2=M, P indicates a quantity of polarized antennas, and Q1, Q2, and P are positive integers.

In a possible implementation, a quantity of antenna ports corresponding to the first codebook is Q1, Q1 is a quantity of antenna ports of same polarization, a quantity of antenna ports corresponding to the second codebook is Q2, Q2 is a quantity of antenna ports of same polarization, Q1*Q2*P=M, P indicates a quantity of polarized antennas, and Q1, Q2, and P are positive integers.

In a possible implementation, the M antenna ports are included in N port groups, the N port groups include a first port group, different antenna ports in the first port group correspond to reference signal ports with a same number, and the different antenna ports in the first port group correspond to different reference signal resources; or the N port groups include a second port group, different antenna ports in the second port group correspond to reference signal ports with different numbers, and the different antenna ports in the second port group correspond to a same reference signal resource.

In a possible implementation, the N port groups correspond to N antenna subarrays, and different ports in a same port group correspond to different weights of a same antenna subarray.

In a possible implementation, the M antenna ports correspond to K reference signal resources, the first codebook is used to quantize channel state information corresponding to each of the K reference signal resources, the second codebook is used to quantize channel state information corresponding to the K reference signal resources, and K is a positive integer.

In a possible implementation, a quantity of antenna ports corresponding to the first codebook is Q1, a quantity of antenna ports corresponding to the second codebook is Q2, Q2=K*Q1, and Q1 and Q2 are less than or equal to M.

In a possible implementation, the M antenna ports correspond to K1 reference signal resources, the first codebook is used to quantize channel information corresponding to each port group of each of the K1 reference signal resources, the second codebook is used to quantize channel information corresponding to joint measurement of at least two parameter signal resources in the K1 reference signal resources, and K1 is a positive integer.

For beneficial effect of the second aspect, refer to beneficial effect of the first aspect. Details are not described again.

According to a third aspect, a communication method is provided. The method may be applied to a terminal side, for example, a terminal device or a communication module in a terminal device, or a circuit or a chip (for example, a modem chip, also referred to as a baseband chip, or an SoC chip or an SIP chip including a modem core) responsible for a communication function in a terminal device. For example, the method is applied to the terminal device. In the method, the terminal device receives third configuration information, where the third configuration information is used to configure M antenna ports, and the M antenna ports are associated with a plurality of reference signal resources, a total quantity of reference signal ports corresponding to the plurality of reference signal resources is greater than or equal to M, and M is a positive integer; receives reference signals corresponding to the plurality of reference signal resources, and determines third channel state information of the M antenna ports; and sends the third channel state information.

In this embodiment of this application, the M antenna ports are associated with a plurality of reference signal resources, so that channel state information measurement of an excessively large quantity of ports can be implemented, and channel state information measurement of low complexity can be implemented.

In a possible implementation, different reference signal resources in the plurality of reference signal resources occupy different slots. For example, the plurality of reference signal resources have a same interval in time domain; or the plurality of reference signal resources occupy a plurality of adjacent downlink slots; or one part of resources in the plurality of parameter signal resources occupy adjacent downlink slots, and the other part of resources occupy non-adjacent downlink slots. When the total quantity of reference signal ports of the plurality of reference signal resources is greater than M, it indicates that there are at least two reference signal resources, a part or all of the reference signal ports correspond to a same antenna port, and different reference signal resources are configured to occupy different slots, which helps reduce a probability of an antenna port conflict.

In a possible implementation, a slot occupied by a first reference signal resource is not adjacent to a slot occupied by a second reference signal resource.

In a possible implementation, the N reference signal resources include a first reference signal resource and a second reference signal resource, and a first reference signal port included in the first reference signal resource and a second reference signal port included in the second reference signal resource correspond to a same antenna port.

In a possible implementation, N pilot resources include at least a first pilot resource and a second pilot resource, the first pilot resource includes Q3 pilot ports, the second pilot resource includes Q4 pilot ports, the Q3+Q4 pilot ports correspond to Q5 antenna ports, and Q5 is less than (Q3+Q4).

In a possible implementation, at least one of the first pilot resource and the second pilot resource corresponds to an antenna port with a same number.

In the foregoing technical solution, that reference signal ports of different reference signal resources correspond to a same antenna port is described. In the foregoing technical solution, reference signal ports of different reference signal resources are configured to correspond to a same antenna port, so that impact of a phase difference between different slots on a channel information measurement result can be reduced, and channel state information obtained through measurement has a high matching degree with an actual channel of the terminal device, thereby improving a data transmission rate.

In a possible implementation, receiving the reference signals corresponding to the plurality of reference signal resources, and determining the third channel state information of the M antenna ports include: receiving reference signals corresponding to the first reference signal resource and the second reference signal resource, and obtaining fourth channel state information corresponding to the first reference signal resource and fifth channel state information corresponding to the second reference signal resource; determining a channel phase difference of a same antenna port in different slots based on the fourth channel state information and the fifth channel state information; and performing phase compensation on the fifth channel state information based on the channel phase difference to obtain the third channel state information.

In a possible implementation, the terminal device may further receive fourth configuration information, where the fourth configuration information is used to configure a third codebook, and a quantity of antenna ports corresponding to the third codebook is equal to M. That the base station configures the codebook for the terminal device complies with provisions of existing protocols.

According to a fourth aspect, a communication method is provided. The method may be applied to a network side, for example, a base station on the network side or a component (for example, a circuit, a chip, or a chip system) in a base station. For example, the method is applied to the base station. In the method, the base station sends third configuration information, where the third configuration information is used to configure M antenna ports, the M antenna ports are associated with a plurality of reference signal resources, a total quantity of reference signal ports corresponding to the plurality of reference signal resources is greater than or equal to M, and M is a positive integer; sends reference signals corresponding to the plurality of reference signal resources; and receives third channel state information.

In a possible implementation, different reference signal resources in the plurality of reference signal resources occupy different slots. For example, the plurality of reference signal resources have a same interval in time domain, or the plurality of reference signal resources occupy a plurality of adjacent downlink slots.

In a possible implementation, a slot occupied by a first reference signal resource is not adjacent to a slot occupied by a second reference signal resource.

In a possible implementation, the N reference signal resources include a first reference signal resource and a second reference signal resource, and a first reference signal port included in the first reference signal resource and a second reference signal port included in the second reference signal resource correspond to a same antenna port.

In a possible implementation, N pilot resources include at least a first pilot resource and a second pilot resource, the first pilot resource includes Q3 pilot ports, the second pilot resource includes Q4 pilot ports, the Q3+Q4 pilot ports correspond to Q5 antenna ports, and Q5 is less than (Q3+Q4).

In a possible implementation, at least one of the first pilot resource and the second pilot resource corresponds to an antenna port with a same number.

In a possible implementation, the base station may further send fourth configuration information, where the fourth configuration information is used to configure a third codebook, and a quantity of antenna ports corresponding to the third codebook is equal to M.

For beneficial effect of the fourth aspect, refer to beneficial effect of the third aspect. Details are not described again.

According to a fifth aspect, an embodiment of this application provides a communication apparatus. The communication apparatus has a function of implementing the first aspect or the third aspect. For example, the communication apparatus includes a corresponding module, unit, or means (means) for performing an operation in the first aspect or the third aspect. The module, unit, or means may be specifically implemented by using software, or implemented by using hardware, or implemented by using a combination of software and hardware.

According to a sixth aspect, an embodiment of this application provides a communication apparatus. The communication apparatus has a function of implementing the second aspect or the fourth aspect. For example, the communication apparatus includes a corresponding module, unit, or means (means) for performing an operation in the second aspect or the fourth aspect. The module, unit, or means may be specifically implemented by using software, or implemented by using hardware, or implemented by using a combination of software and hardware.

According to a seventh aspect, an embodiment of this application provides a communication apparatus. The communication apparatus includes a memory and one or more processors. The memory is configured to store a part or all of a necessary computer program or instructions for implementing the function in the first aspect or the third aspect. The one or more processors may execute the computer program or instructions. When the computer program or instructions are executed, the communication apparatus is enabled to implement the method in any possible design or implementation of the first aspect or the third aspect.

In a possible design, the communication apparatus may further include an interface circuit, and the processor is configured to communicate with another apparatus or component via the interface circuit.

In a possible design, the communication apparatus may further include the memory.

The communication apparatus may be a terminal device, or a communication module in a terminal device, or a chip responsible for a communication function in a terminal device, for example, a modem chip (also referred to as a baseband chip), or an SoC or an SIP chip including a modem module.

According to an eighth aspect, an embodiment of this application provides a communication apparatus. The communication apparatus includes a memory and one or more processors. The memory is configured to store a part or all of a necessary computer program or instructions for implementing the function in the second aspect or the fourth aspect. The one or more processors may execute the computer program or instructions. When the computer program or instructions are executed, the communication apparatus is enabled to implement the method in any possible design or implementation of the second aspect or the fourth aspect.

In a possible design, the communication apparatus may further include an interface circuit, and the processor is configured to communicate with another apparatus or component via the interface circuit.

In a possible design, the communication apparatus may further include the memory.

The communication apparatus may be a base station, or a communication module in a base station, or a chip responsible for a communication function in a base station, for example, a modem chip (also referred to as a baseband chip), or an SoC or an SIP chip including a modem module.

According to a ninth aspect, an embodiment of this application provides a communication system, including a communication apparatus configured to implement any possible design or implementation of the first aspect and a communication apparatus configured to implement any possible design or implementation of the second aspect; or including a communication apparatus configured to implement any possible design or implementation of the third aspect and a communication apparatus configured to implement any possible design or implementation of the fourth aspect.

According to a tenth aspect, an embodiment of this application provides a computer-readable storage medium. The computer-readable storage medium is configured to store a computer program. When the computer program runs on a computer, the computer is enabled to perform the method in any possible design of the first aspect to the fourth aspect.

According to an eleventh aspect, an embodiment of this application provides a computer program product, including a computer program. When the computer program runs on a computer, the computer is enabled to perform the method in any possible design of the first aspect to the fourth aspect.

According to a twelfth aspect, a chip system is provided, including a processor and an interface. The processor is configured to: invoke instructions from the interface and run the instructions, to enable the chip system to implement the method in any possible design of the first aspect to the fourth aspect.

For beneficial effect of the fifth aspect to the twelfth aspect, refer to the beneficial effect of the first aspect or the third aspect. Details are not described again.

### BRIEF DESCRIPTION OF DRAWINGS

FIG. 1A, FIG. 1B, and FIG. 1C are diagrams of several application scenarios to which embodiments of this application is applicable;
FIG. 2 is a diagram of a plurality of sets of reference signal resources;
FIG. 3 is a flowchart of a communication method according to an embodiment of this application;
FIG. 4 is a diagram of a 16H4V2P antenna array plane;
FIG. 5 is a flowchart of another communication method according to an embodiment of this application;
FIG. 6A to FIG. 6C are diagrams of slots occupied by several reference signal resources according to an embodiment of this application;
FIG. 7 is a diagram of an architecture of a communication system according to an embodiment of this application; and
FIG. 8 is a diagram of a structure of another communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system like a long term evolution (long term evolution, LTE) system, a 5th generation (5th generation, 5G) mobile communication system like a new radio (new radio, NR) system, and a future evolved communication system.

The technical solutions in embodiments of this application may be further applied to technical fields such as unmanned driving (unmanned driving), assisted driving (driver assistance, ADAS), intelligent driving (intelligent driving), connected driving (connected driving), intelligent network driving (Intelligent network driving), car sharing (car sharing), a smart/intelligent car (smart/intelligent car), a digital car (digital car), an unmanned car (unmanned car/driverless car/pilotless car/automobile), the Internet of vehicles (Internet of vehicles, IoV), a self-driving car (self-driving car/autonomous car), a cooperative vehicle infrastructure (cooperative vehicle infrastructure, CVIS), an intelligent transportation system (intelligent transportation system, ITS), and vehicular communication (vehicular communication).

Aspects, embodiments, or features are presented in embodiments of this application by describing a system that may include a plurality of devices, components, modules, or the like. It should be appreciated and understood that each system may include another device, component, module, and the like, and/or may include none of devices, components, modules, and the like described with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner. In embodiments of this application, "of (of)", "corresponding, relevant (corresponding, relevant)", and "corresponding (corresponding)" may be interchangeably used sometimes. It should be noted that meanings expressed by the terms are consistent when differences of the terms are not emphasized.

The communication system and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of network architectures and emergence of new service scenarios, the technical solutions provided in embodiments of this application are also applicable to similar technical problems.

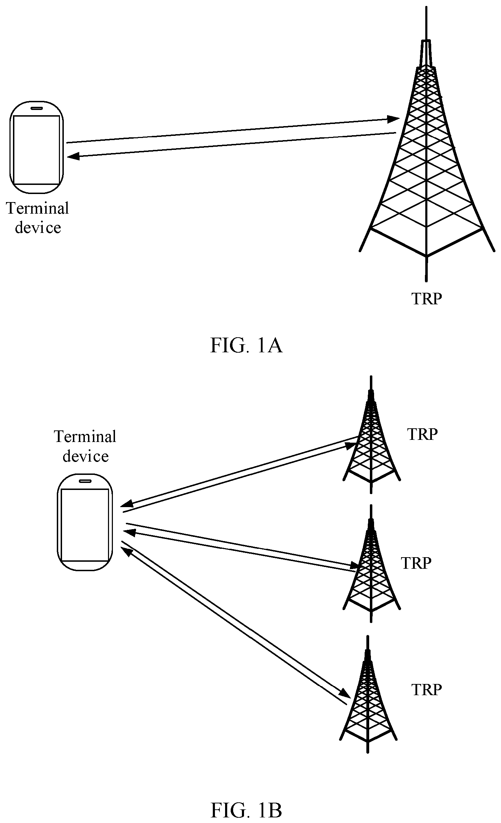

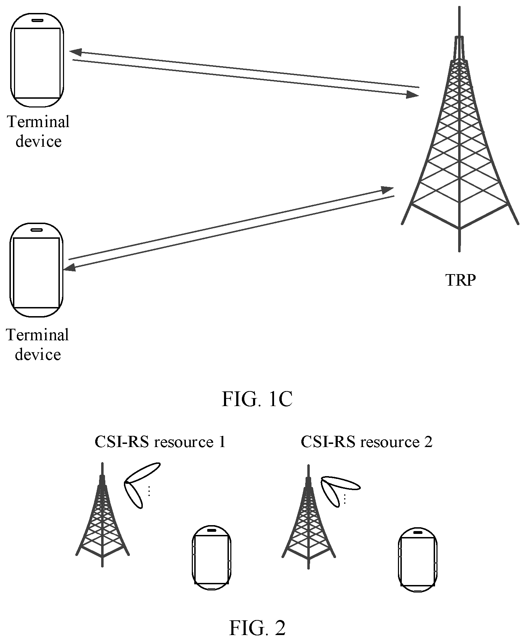

For ease of understanding embodiments of this application, FIG. 1A is a diagram of an application scenario to which an embodiment of this application is applicable. FIG. 1A includes a terminal device and a transmission reception point (transmission reception point, or transmit/receive point, TRP). The terminal device and the TRP may communicate with each other, and the terminal device may receive a reference signal sent by the TRP. Optionally, the application scenario shown in FIG. 1A may further include a plurality of terminal devices and a plurality of TRPs. One terminal device may communicate with a plurality of TRPs, and one TRP may also communicate with a plurality of terminal devices. For example, refer to FIG. 1B and FIG. 1C. FIG. 1B shows a scenario in which one terminal device may communicate with three TRPs, and FIG. 1C shows a scenario in which one TRP communicates with two terminal devices.

The following describes the terminal device and the TRP.

### (1) Terminal device

The terminal device (terminal device) may be a device or a module that accesses the foregoing communication system and has a corresponding communication function. The terminal device may also be referred to as user equipment (user equipment, UE), a terminal, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus. A communication module, a circuit, or a chip that performs a corresponding communication function is usually disposed in the terminal. Program instructions used to perform a corresponding communication function may be further configured in the terminal.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless transceiver function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart sound box, a smart refrigerator, or fitness equipment) in a smart home (smart home), a transport vehicle that has a wireless communication function, a communication module, or a road side unit (road side unit, RSU) that has a terminal function.

### (2) TRP

The TRP may be a device or module that is located on a network side of the foregoing communication system and has a corresponding communication function. A communication module, a circuit, or a chip that performs a corresponding communication function is usually disposed in the TRP. Program instructions for performing a corresponding communication function and corresponding program instructions may also be configured in the TRP.

For example, the TRP in embodiments of this application may be a RAN device or a network element deployed in a radio access network (radio access network, RAN). In embodiments of this application, an example in which the TRP is a base station is used for description. For example, the TRP may be a RAN device or an apparatus that can support a RAN device to implement a function, for example, a chip system or a combined component or component that can implement a function of an access network device, and the apparatus may be mounted in the RAN device. For another example, the TRP may be an access point (access point, AP) in a Wi-Fi system, such as a home gateway, a router, a server, a switch, a bridge, a base station, a base station controller (base station controller, BSC), a base transceiver station (base transceiver station, BTS), a home base station, a baseband unit (baseband unit, BBU), a wireless relay node, or a wireless backhaul node; or may be an evolved NodeB (evolved NodeB, eNB) in a 4G system, a next-generation eNB (ng-eNB) during transition from 4G to 5G, a next generation NodeB (next generation NodeB, gNB) in a 5G system, or a RAN node that implements (partial) functions of a gNB. The RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). Alternatively, the TRP may be a satellite, or a base station in various forms in the future. In addition, the TRP may be a macro base station, or may be a micro base station or an indoor base station, or may be a relay node, a donor node, or the like.

It may be understood that FIG. 1A is merely a simplified diagram of an example for ease of understanding. The communication system may further include another possible device, for example, may further include a wireless relay device and a wireless backhaul device. The devices may further include different functional units, which are not shown in FIG. 1A. Communication between different devices in embodiments of this application may be direct communication between different devices (that is, no relay or forwarding by another device is required), or may be communication between different devices via another device (that is, relay or forwarding by another device is required), or may be communication between a functional unit in a device and another device via another functional unit. In other words, in this application, "sending information to... (a terminal device or a TRP)" may be understood as that a destination end of the information is the terminal device or the TRP, and may include directly or indirectly sending the information to the terminal device or the TRP. "Receiving information from (a terminal device or a TRP)" may be understood as that a source end of the information is the terminal or the TRP, and may include directly or indirectly receiving the information from the terminal or the TRP. Information may undergo necessary processing between a source end and a destination end of information transmission, for example, format change, digital-to-analog conversion, amplification, and filtering. However, the destination end can understand valid information from the source end. Similar expressions in embodiments of this application may be understood similarly. Details are not described herein again.

Currently, a maximum of 32 ports are supported by a reference signal resource that is configured by a base station for a terminal device and used for channel measurement. When a quantity of antenna subarrays included in an antenna array of the base station is greater than 32, weighting processing may be performed on reference signals on the reference signal resource. For example, the base station may configure and send CSI-RSs by traversing a plurality of measurement schemes. For example, refer to FIG. 2. The base station may configure a plurality of sets of reference signal resources (for example, CSI-RS resources), and send CSI-RSs through the plurality of sets of CSI-RS resources, where CSI-RSs corresponding to different CSI-RS resources use different weighting vectors. The terminal device may measure CSI-RSs on a plurality of CSI-RS resources to obtain a plurality of pieces of CSI (for example, feed back precoding matrix indication (precoding matrix indication, PMI) weight information) corresponding to the plurality of CSI-RS resources, and select one piece of CSI from the plurality of pieces of CSI and feed back the CSI to the base station. After receiving the CSI, the base station may determine, based on PMI weight information in the CSI, a weighting vector for sending a downlink signal.

However, CSI information of only one CSI-RS resource is selected from the plurality of CSI-RS resources for reporting, and the base station needs to configure increasing CSI-RS resources under encryption weights, so that the terminal device selects a weighting vector that best matches a channel of the terminal device and corresponding CSI information. Consequently, reference signal resource overheads increase, and measurement complexity of the terminal device also significantly increases with a quantity of configured reference signal resources.

In view of this, in this embodiment of this application, the base station may perform channel measurement on a CSI-RS of M antenna ports to obtain channel information corresponding to the M antenna ports, and obtain, through reconstruction based on the channel information, CSI that best matches an actual channel of the terminal device. In comparison with a solution in which one piece of CSI is selected from a plurality of pieces of CSI, in this embodiment of this application, the terminal device can select a most matching weighting vector and corresponding CSI information on a premise of limited reference signal resource overheads and low measurement complexity of the terminal device.

The following describes the method provided in embodiments of this application with reference to the accompanying drawings.

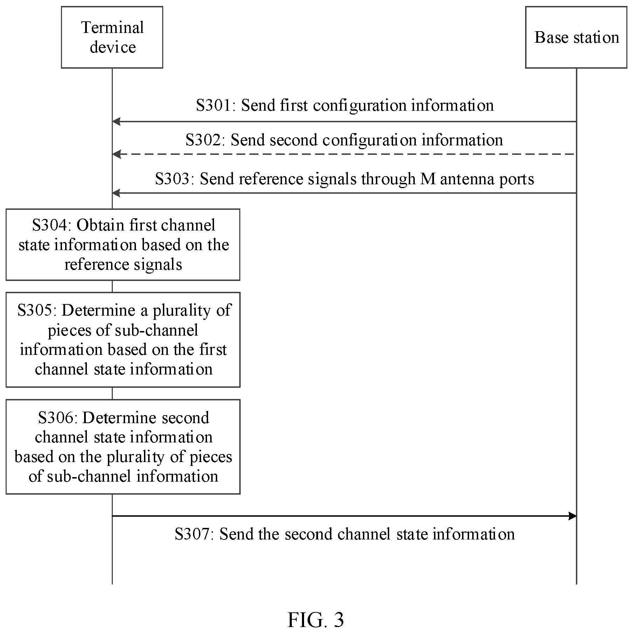

An embodiment of this application provides a first communication method. FIG. 3 is a flowchart of the method. The method may be applied to the communication systems shown in FIG. 1A to FIG. 1C. For example, a base station in the method is the TRP in the communication systems shown in FIG. 1A to FIG. 1C, and a terminal device in the method is the terminal device in the communication systems shown in FIG. 1A to FIG. 1C. In this embodiment of this application, all optional steps are represented by dashed lines.

S301: The base station sends first configuration information to the terminal device. Correspondingly, the terminal device receives the first configuration information.

The first configuration information is used to configure M antenna ports, and M is a positive integer. The M antenna ports are associated with one or more reference signal resources. Optionally, the first configuration information may be carried, for example, in one or more pieces of the following signaling: radio resource control (radio resource control, RRC) signaling, media access control (or medium access control) (media/medium access control, MAC) signaling, or downlink control information (downlink control information, DCI) signaling.

Each reference signal resource may include a plurality of reference signal ports, reference signal port numbers corresponding to different reference signal ports in a same reference signal resource are different, and reference signal port numbers corresponding to reference signal ports in different reference signal resources are the same. If two reference signal resources include different quantities of reference signal ports, reference signal port numbers of all reference signal ports in the reference signal resource with a smaller quantity of reference signal ports are the same as those of the first corresponding quantity of reference signal ports in the reference signal resource with the larger quantity of reference signal ports.

For example, a reference signal resource A and a reference signal resource B each include 32 reference signal ports, and reference signal port numbers corresponding to the 32 reference signal ports included in each of the reference signal resource A and the reference signal resource B are #0 to #31. For another example, the reference signal resource A includes 32 reference signal ports, the reference signal resource B includes 16 reference signal ports, reference signal port numbers corresponding to the 32 reference signal ports included in the reference signal resource A are #0 to #31, and reference signal port numbers corresponding to the 16 reference signal ports included in the reference signal resource B are #0 to #16, that is, the reference signal port numbers corresponding to the reference signal ports included in the reference signal resource B are the same as the reference signal port numbers corresponding to the first 16 reference signal ports included in the reference signal resource A. In embodiments of this application, the reference signal resource may also be referred to as a pilot resource. In embodiments of this application, the reference signal resource and the pilot resource may be interchangeable.

For example, M=128. Numbers of the 128 antenna ports are #3000, #3001, ..., and #3127. The 128 antenna ports may be associated with one reference signal resource, or may be associated with a plurality of reference signal resources. When the 128 antenna ports are associated with a plurality of reference signal resources, quantities of antenna ports corresponding to different reference signal resources in the plurality of reference signal resources may be the same or may be different, and different reference signal resources may correspond to some same antenna ports (which may also be understood as that one antenna port may correspond to reference signal ports of a plurality of reference signal resources), and a total quantity of antenna ports corresponding to the plurality of reference signal resources is 128. For example, Table 1 to Table 4 show several examples of correspondences between antenna ports and reference signal ports corresponding to a plurality of reference signal resources.

**Table 1**

| | Reference signal resource 1 | Reference signal resource 2 | Reference signal resource 3 | Reference signal resource 4 |
|---|---|---|---|---|
| Reference signal port numbers | #0 to #31 | #0 to #31 | #0 to #31 | #0 to #31 |
| Antenna port numbers | #3000 to #3031 | #3032 to #3063 | #3064 to #3095 | #3096 to #3127 |

Table 1 is an example in which the 128 antenna ports are associated with four reference signal resources. In this example, each reference signal resource includes a same quantity of reference signal ports, each reference signal resource corresponds to a same quantity of antenna ports, and reference signal ports included in each reference signal resource correspond to different antenna port numbers (which may also be understood as that the reference signal ports included in each reference signal resource correspond to different antenna ports).

**Table 2**

| | Reference signal resource 1 | Reference signal resource 2 | Reference signal resource 3 | Reference signal resource 4 | Reference signal resource 5 |
|---|---|---|---|---|---|
| Reference signal port numbers | #0 to #31 | #0 to #31 | #0 to #31 | #0 to #31 | #0 to #31 |
| Antenna port numbers | #3000 to #3031 | #3024 to #3055 | #3048 to #3079 | #3072 to #3103 | #3096 to #3127 |

Table 2 is an example in which the 128 antenna ports are associated with five reference signal resources. In this example, each reference signal resource includes a same quantity of reference signal ports, each reference signal resource corresponds to a same quantity of antenna ports, and some antenna ports correspond to reference signal ports of a plurality of reference signal resources. For example, the antenna ports with the antenna port numbers #3024 to #3031 correspond to the reference signal ports with the reference signal port numbers #24 to #31 in the reference signal resource 1, and correspond to the reference signal ports with the reference signal port numbers #0 to #7 in the reference signal resource 2. The antenna ports with the antenna port numbers #3048 to #3055 correspond to the reference signal ports with the reference signal port numbers #24 to #31 in the reference signal resource 2, and correspond to the reference signal ports with the reference signal port numbers #0 to #7 in the reference signal resource 3. The antenna ports with the antenna port numbers #3072 to #3079 correspond to the reference signal ports with the reference signal port numbers #24 to #31 in the reference signal resource 3, and correspond to the reference signal ports with the reference signal port numbers #0 to #7 in the reference signal resource 4. The antenna ports with the antenna port numbers #3096 to #3103 correspond to the reference signal ports with the reference signal port numbers #24 to #31 in the reference signal resource 4, and correspond to the reference signal ports with the reference signal port numbers #0 to #7 in the reference signal resource 5.

**Table 3**

| | Reference signal resource 1 | Reference signal resource 2 | Reference signal resource 3 | Reference signal resource 4 | Reference signal resource 5 |
|---|---|---|---|---|---|
| Reference signal port numbers | #0 to #23 | #0 to #23 | #0 to #23 | #0 to #23 | #0 to #31 |
| Antenna port numbers | #3000 to #3023 | #3024 to #3047 | #3048 to #3071 | #3072 to #3096 | #3096 to #3127 |

Table 3 is another example in which the 128 antenna ports are associated with five reference signal resources. In this example, each reference signal resource corresponds to a different quantity of antenna ports. For example, the reference signal resource 1, the reference signal resource 2, the reference signal resource 3, and the reference signal resource 4 each correspond to 24 antenna ports, the reference signal resource 5 corresponds to 32 antenna ports, and each reference signal resource corresponds to different antenna ports.

**Table 4**

| | Reference signal resource 1 | Reference signal resource 2 | Reference signal resource 3 | Reference signal resource 4 | Reference signal resource 5 |
|---|---|---|---|---|---|
| Reference signal port numbers | #0 to #23 | #0 to #23 | #0 to #31 | #0 to #31 | #0 to #31 |
| Antenna port numbers | #3000 to #3023 | #3024 to #3047 | #3048 to #3079 | #3072 to #3103 | #3096 to #3127 |

Table 4 is still another example in which the 128 antenna ports are associated with five reference signal resources. In this example, each reference signal resource corresponds to a different quantity of antenna ports. For example, the reference signal resource 1 and the reference signal resource 2 each correspond to 24 antenna ports, and the reference signal resource 3, the reference signal resource 4, and the reference signal resource 5 each correspond to 32 antenna ports. Some antenna port numbers correspond to a plurality of reference signal resources. For example, the antenna ports with the antenna port numbers #3072 to #3079 correspond to the reference signal ports with the reference signal port numbers #24 to #31 in the reference signal resource 3, and correspond to the reference signal ports with the reference signal port numbers #0 to #7 in the reference signal resource 4.

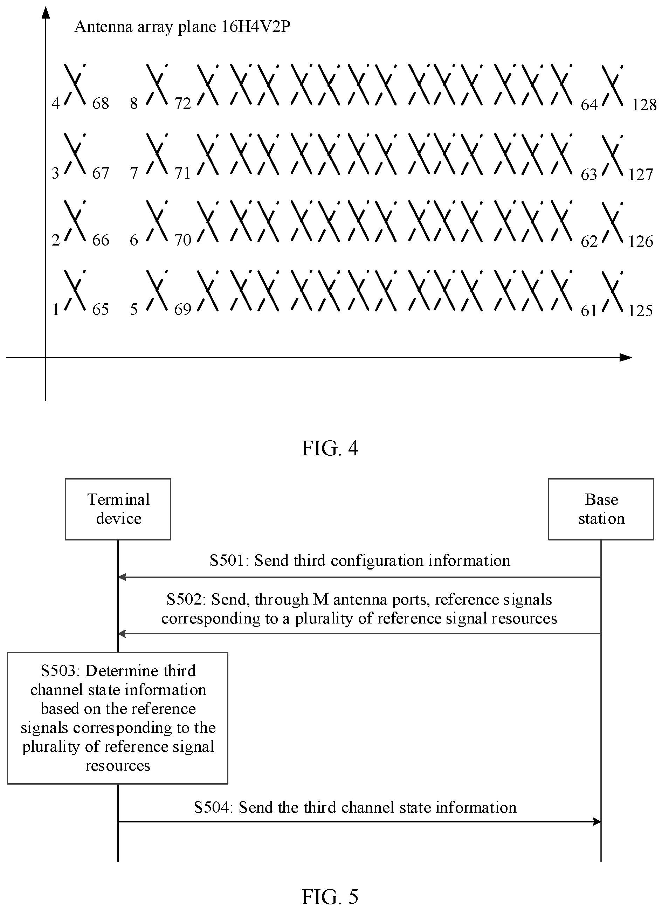

Optionally, the M antenna ports are formed by weighting physical antennas of the base station. For example, the base station includes 128 physical antennas. An antenna array plane of the 128 physical antennas may be, for example, 16H4V2P, where H (horizontal, horizontal) indicates a quantity of horizontal antenna ports, V (vertical, vertical) indicates a quantity of vertical antenna ports, and P (polarization, polarization) indicates a quantity of polarized antennas. For example, FIG. 4 shows an example of the 16H4V2P antenna array plane.

The antenna array plane may be divided into a plurality of antenna subarrays, and each antenna subarray may include one or more physical antennas. For example, the antenna array plane may be divided into 64 antenna subarrays, and each antenna subarray includes two physical antennas (for example, 2H1V or 1H2V); or the antenna array plane may be divided into 32 antenna subarrays, and each antenna subarray may include four physical antennas (for example, 2H2V, 4H1V, or 1H4V), or the antenna array plane may be further divided into 16 antenna subarrays, and each antenna subarray includes eight physical antennas (for example, 2H4V, 4H2V, or 8H1V).

Optionally, a quantity of antenna ports corresponding to each antenna subarray may be, for example, related to a quantity of physical antennas included in each antenna subarray. For example, each antenna subarray includes four physical antennas, and one antenna subarray may correspond to four antenna ports. For example, an antenna array plane is divided into 32 antenna subarrays, and an antenna subarray is 2H2V. A correspondence between the antenna subarray and an antenna port is shown in Table 5 and Table 6.

**Table 5**

| Physical antenna numbers | Used weight | Antenna port number |
|---|---|---|
| #1, #2, #5, and #6 | 1 | #3000 |
| #3, #4, #7, and #8 | 1 | #3001 |
| ... | ... | ... |
| #123, #124, #127, and #128 | 1 | #3031 |
| #1, #2, #5, and #6 | 2 | #3032 |
| ... | ... | ... |
| #123, #124, #127, and #128 | 2 | #3063 |
| ... | | |
| #123, #124, #127, and #128 | 4 | #3127 |

**Table 6**

| Physical antenna numbers | Used weight | Antenna port number |
|---|---|---|
| #1, #2, #5, and #6 | 1 | #3000 |
| #1, #2, #5, and #6 | 2 | #3001 |
| #1, #2, #5, and #6 | 3 | #3002 |
| #1, #2, #5, and #6 | 4 | #3003 |
| #3, #4, #7, and #8 | 1 | #3004 |
| #3, #4, #7, and #8 | 2 | #3005 |
| ... | ... | ... |
| #65, #66, #69, and #70 | 1 | #3064 |
| ... | ... | ... |
| #123, #124, #127, and #128 | 4 | #3127 |

The used weights are orthogonal discrete Fourier transform (discrete Fourier transformation, DFT) weights or any other weights with orthogonal characteristics.

Optionally, the M antenna ports may be included in N port groups, that is, the M antenna ports are grouped into the N port groups, and each port group may correspond to one or more antenna subarrays. For example, the N port groups include a port group 1, and the port group 1 may correspond to an antenna subarray 1 (for example, an antenna subarray including physical antennas numbered #1, #2, #5, and #6), or the port group 1 may correspond to an antenna subarray 1 and an antenna subarray 2 (for example, an antenna subarray including physical antennas numbered #3, #4, #7, and #8).

When one port group corresponds to one antenna subarray, different antenna ports in a same port group correspond to different weights of a same antenna subarray. For example, the N port groups include a first port group (for example, the foregoing port group 1). If a correspondence between the antenna port number and the physical antenna number is shown in Table 5, antenna port numbers corresponding to antenna ports included in the port group 1 are #3000, #3032, #3064, and #3096. If a correspondence between the antenna port number and the physical antenna port number is shown in Table 6, antenna port numbers corresponding to antenna ports included in the port group 1 are #3000, #3001, #3002, and #3003.

Optionally, different antenna ports in the port group 1 may correspond to different reference signal resources. For example, a correspondence between the reference signal resource and the antenna port number is the relationship shown in Table 1, and a correspondence between the antenna port number and the physical antenna number is the relationship shown in Table 5. Antenna port numbers corresponding to antenna ports included in the port group 1 include the antenna port number #3000 corresponding to the reference signal resource 1, the antenna port number #3032 corresponding to the reference signal resource 2, the antenna port number #3064 corresponding to the reference signal resource 3, and the antenna port number #3096 corresponding to the reference signal resource 4. That is, reference signal resources corresponding to different antenna ports in the port group 1 are the reference signal resource 1, the reference signal resource 2, the reference signal resource 3, and the reference signal resource 4.

Alternatively, Table 7 is an example in which different antenna ports in a same port group correspond to different reference signal resources. In Table 7, an example in which a correspondence between the antenna port number and the physical antenna number is the relationship shown in Table 5 is used.

**Table 7**

| Reference signal resource number | Reference signal port number | Antenna port number |
|---|---|---|
| #0 | #0 | #3000 |
| #0 | #1 | #3001 |
| #0 | #2 | #3002 |
| ... | ... | ... |
| #0 | #15 | #3015 |
| #0 | #16 | #3016 |
| ... | ... | ... |
| #0 | #31 | #3031 |
| ... | | ... |
| #1 | #0 | #3032 |
| #1 | #1 | #3033 |
| ... | ... | ... |
| #1 | #31 | #3063 |
| ... | ... | ... |
| #3 | #0 | #3096 |
| ... | ... | ... |
| #3 | #31 | #3127 |

In Table 7, the reference signal resource number #0 is a number of the reference signal resource 1, the reference signal resource number #1 is a number of the reference signal resource 2, the reference signal resource number #2 is a number of the reference signal resource 3, and the reference signal resource number #3 is a number of the reference signal resource 4.

For the reference signal port #0 corresponding to the reference signal resource 1, the reference signal port #0 corresponding to the reference signal resource 2, the reference signal port #0 corresponding to the reference signal resource 3, and the reference signal port #0 corresponding to the reference signal resource 4, corresponding antenna ports may be included in a same port group (namely, the foregoing port group 1). That is, reference signal resources corresponding to different antenna ports in the port group 1 are the reference signal resource 1, the reference signal resource 2, the reference signal resource 3, and the reference signal resource 4.

Alternatively, different antenna ports in the port group 1 may correspond to a same reference signal resource. For example, a correspondence between the reference signal resource and the antenna port number is the relationship shown in Table 1, and a correspondence between the antenna port number and the physical antenna number is the relationship shown in Table 6. Antenna port numbers corresponding to the antenna ports included in the port group 1 include the antenna port numbers #3000 to #3003 corresponding to the reference signal resource 1, that is, reference signal resources corresponding to different antenna ports in the port group 1 are the reference signal resource 1. Table 8 is an example in which different antenna ports in a same port group correspond to a same reference signal resource.

**Table 8**

| Reference signal resource number | Reference signal port number | Antenna port number |
|---|---|---|
| #0 | #0 | #3000 |
| #0 | #1 | #3001 |
| #0 | #2 | #3002 |
| #0 | #3 | #3003 |
| #0 | #4 | #3004 |
| #0 | #5 | #3005 |
| #0 | #6 | #3006 |
| #0 | #7 | #3007 |
| ... | ... | ... |
| #1 | #0 | #3032 |
| ... | ... | ... |
| #3 | #0 | #3096 |
| ... | ... | ... |
| #3 | #30 | #3126 |
| #3 | #31 | #3127 |

Optionally, the same reference signal resource may further include antenna ports of two port groups, and the two port groups respectively correspond to two polarized antenna sets. For example, refer to Table 9.

**Table 9**

| Reference signal resource number | Reference signal port number | Antenna port number |
|---|---|---|
| #0 | #0 | #3000 |
| #0 | #1 | #3001 |
| #0 | #2 | #3002 |
| ... | ... | ... |
| #0 | #15 | #3015 |
| #0 | #16 | #3064 |
| ... | ... | ... |
| #0 | #31 | #3079 |
| ... | | ... |
| #1 | #0 | #3016 |
| #1 | #1 | #3017 |
| ... | ... | ... |
| #1 | #31 | #3095 |
| ... | ... | ... |
| #3 | #0 | #3048 |
| ... | ... | ... |
| #3 | #31 | #3127 |

Refer to FIG. 4. An example in which one antenna subarray includes four physical antennas is used. An antenna sub array whose physical antenna numbers are #1, #2, #5, and #6 and an antenna subarray whose physical antenna numbers are #65, #66, #69, and #70 belong to two polarized physical antenna sets.

Optionally, the base station may further send, to the terminal device, information about port groups corresponding to the M antenna ports, and the terminal device may further send a correspondence between the antenna subarray and the antenna port to the terminal device. Therefore, S302 may be further performed.

S302: The base station sends second configuration information to the terminal device. Correspondingly, the terminal device receives the second configuration information.

The second configuration information includes a first codebook and a second codebook. The first codebook may indicate information about an antenna sub array, for example, indicate a correspondence between an antenna subarray and an antenna port. The first codebook includes a quantity of first antenna ports, Q1, and first oversampling parameters (subO1, subO2), where Q1 indicates a quantity of antenna ports corresponding to each antenna sub array, for example, Q1=subN1*subN2, subN1 indicates a quantity of horizontal antenna ports in each antenna sub array, and subN2 indicates a quantity of vertical antenna ports in each antenna sub array. The first oversampling parameter indicates an oversampling factor of an orthogonal weight basis included in the first codebook, subO1 indicates an oversampling factor of an orthogonal weight of the horizontal antenna port, and subO2 indicates an oversampling factor of an orthogonal weight of the vertical antenna port. A codebook quantization weight matrix corresponding to the first codebook is, for example, a formula 1 and a formula 2: ${u}_{m 1} = \left\{\begin{matrix}\left[1 {e}^{j \frac{2 πm 1}{subO 2 ∗ subN 2}}L {e}^{j \frac{2 πm 1 \left(subN2-1\right)}{subO 2 ∗ subN 2}}\right] , subN 2 > 1 \\ 1 , subN 2 = 1\end{matrix}\right.$ (1) ${v}_{l 1 , m 1} = \left[{u}_{m 1}\left({e}^{j \frac{2 πl 1}{subO 1 ∗ subN 1}}\right){u}_{m 1} L\left({e}^{j \frac{2 πl 1 \left(subN1-1\right)}{subO 1 ∗ subN 1}}\right){u}_{m 1}\right]$ (2)

Herein, *u*_{*m*1} is a weight vector of a vertical antenna port corresponding to the first codebook, m1 is a phase quantization value of the weight vector of the vertical antenna port corresponding to the first codebook, *l*1 is a phase quantization value of a weight vector of a horizontal antenna port corresponding to the first codebook, L represents an omitted part, and *v*_{*l*1,*m*1} is a joint weight vector of the horizontal antenna port and the vertical antenna port corresponding to the first codebook.

The second codebook may indicate the information about the port groups corresponding to the M antenna ports, for example, may indicate a quantity of port groups. The second codebook includes a second antenna port quantity Q2 and second oversampling parameters (O1, O2). Herein, Q2 indicates a quantity of antenna subarrays included in the antenna array plane, for example, Q2=N1*N2, where N1 indicates a quantity of horizontal antenna subarrays, N2 indicates a quantity of antenna ports in a vertical antenna sub array, and the second oversampling parameter indicates an oversampling factor of an orthogonal weight basis included in the second codebook. A codebook quantization weight matrix corresponding to the second codebook is, for example, a formula 3 and a formula 4: ${u}_{m} = \left\{\begin{matrix}\left[1 {e}^{j \frac{2 πm}{O 2 ∗ N 2}}L {e}^{j \frac{2 πm \left(N2-1\right)}{O 2 ∗ N 2}}\right] , N 2 > 1 \\ 1 , N 2 = 1\end{matrix}\right.$ (3) ${v}_{l , m} = \left[{u}_{m}\left({e}^{j \frac{2 πl}{O 1 ∗ N 1}}\right){u}_{m} L\left({e}^{j \frac{2 πl \left(N-1\right)}{O 1 ∗ N 1}}\right){u}_{m}\right]$ (4)

Herein, *uₘ* is a weight vector of a vertical antenna port corresponding to the second codebook, *m* is a phase quantization value of the weight vector of the vertical antenna port corresponding to the second codebook, *l* is a phase quantization value of a weight vector of a horizontal antenna port corresponding to the second codebook, and *v_{l,m}* is a joint weight vector of the horizontal antenna port and the vertical antenna port corresponding to the second codebook.

Optionally, Q1*Q2*P=M, where P indicates a quantity of polarized antennas, and P is a positive integer. The foregoing antenna array plane 16H4V2P is used as an example, where P=2.

Optionally, the first codebook may be used to quantize channel information measured by each of K reference signal resources, and the second codebook is used to quantize channel information jointly measured by a plurality of reference signal resources in the K reference signal resources. For example, when K=4, each reference signal resource includes 32 pilot ports, and a cross-polarized antenna is used on the base station side, the quantity of antenna ports of the first codebook is 32=subN1*subN2*2. If the quantity of antenna ports of the second codebook is N1*N2*2=64, the second codebook is used to quantize channel information, of 64 antenna ports, jointly measured by two reference signal resources. If the quantity of antenna ports of the second codebook is N1*N2*2=128, the second codebook is used to quantize channel information, of 128 antenna ports, jointly measured by four reference signal resources.

Optionally, the second configuration information may be carried, for example, in one or more pieces of the following signaling: RRC signaling, MAC signaling, or DCI signaling. The second configuration information and the first configuration information may be the same information, or may be different information. When the first configuration information and the second configuration information are different information, the first configuration information and the second configuration information may be sent based on the same information, or may be simultaneously sent based on different information, or may be sent at different moments based on different information. This is not limited in embodiments of this application.

S303: The base station sends reference signals to the terminal device through the M antenna ports. Correspondingly, the terminal device receives the reference signals corresponding to the M antenna ports.

The reference signal may be, for example, a non-zero power (non-zero power, NZP)-CSI-RS, a CSI-synchronization signal block (synchronization signal block, SSB), a zero power (zero power, ZP)-CSI-RS, or a CSI-interference measurement (interference measurement, IM) signal.

S304: The terminal device obtains first channel state information based on the reference signals of the M antenna ports.

The terminal device may perform channel measurement on the reference signals corresponding to the M antenna ports to obtain channel information corresponding to the M antenna ports, namely, the first channel state information. For example, the first channel state information is H₁₂₈ₚₒᵣₜ = [h₀, h₁ ... h₁₂₇]. For example, h₀ may be understood as channel information corresponding to an antenna port whose antenna port number is #3000, and h₁₂₇ may be understood as channel information corresponding to an antenna port whose antenna port number is #3127.

S305: The terminal device determines a plurality of pieces of sub-channel information based on the first channel state information.

Each of the plurality of pieces of sub-channel information includes channel information corresponding to a plurality of antenna ports. The plurality of pieces of sub-channel information corresponds to the M antenna ports, and each piece of sub-channel information corresponds to a same quantity of antenna ports.

Optionally, the terminal device may determine the plurality of pieces of sub-channel information based on the first codebook in S302 and the first channel state information. For example, when Q1=4, the terminal device may determine that each piece of sub-channel information includes channel information corresponding to four antenna ports, and may determine that a quantity of pieces of sub-channel information is 32. The terminal device may determine, based on the correspondence that is between an antenna subarray and an antenna port and indicated by the first codebook, which four antenna ports correspond to the channel information included in each sub-channel information. For example, if the first codebook indicates that the correspondence between the antenna subarray and the antenna port is the relationship shown in Table 5, the terminal device may determine that channel information included in sub-channel information 1 (for example, *H*₁) is channel information corresponding to antenna ports whose antenna port numbers are #3000, #3032, #3064, and #3096, that is, H₁ = [h₀, h₃₂, h₆₄, h₉₆]. If the first codebook indicates that the correspondence between the antenna subarray and the antenna port is the relationship shown in Table 6, the terminal device may determine that channel information included in *H*₁ is channel information corresponding to antenna ports whose antenna port numbers are #3000, #3001, #3002, and #3003, that is, H₁ = [h₀, h₁, h₂, h₃].

Optionally, the terminal device may further determine, based on the port group, the channel information included in each piece of sub-channel information. For example, the terminal device may determine that channel information corresponding to antenna ports of one port group is one piece of sub-channel information.

Optionally, each of a plurality of pieces of sub-channel information of the terminal device corresponds to a channel measurement value of one reference signal resource. For example, for four reference signal resources, each reference signal resource has 32 ports, and first channel state information is H_{32port,0} = [h₀, h₁ ... h₃₂] , H_{32port,1} = [h₀, h₁ ... h₃₂], H_{32port,2} = [h₀, h₁ ... h₃₂], and H_{32port,3} = [h₀, h₁ ... h₃₂], where H_{32port,0} corresponds to a channel measurement value of a first reference signal resource, H_{32port,1} corresponds to a channel measurement value of a second reference signal resource, and the like.

Optionally, each of a plurality of pieces of sub-channel information of the terminal device corresponds to channel measurement values of a plurality of reference signal resources. For example, for four reference signal resources, each reference signal resource has 32 ports, and first channel state information is H_{64port,0} = [h₀, h₁ ... h₆₄], H_{64port,1} = [h₀, h₁ ... h₆₄], ..., and H_{64port,3} = [h₀, h₁ ... h₆₄], where H_{64port,0} corresponds to a joint channel measurement value of a first reference signal resource and a second reference signal resource, H₆₄ₚₒᵣt_{,1} corresponds to a joint channel measurement value of the first reference signal resource and a third reference signal resource, and the like.

S306: The terminal device determines second channel state information based on the plurality of pieces of sub-channel information.

Optionally, the terminal device may quantize the plurality of pieces of sub-channel information based on the second codebook to obtain the second channel state information. The terminal device quantizes the plurality of pieces of sub-channel information based on the second codebook in the following two manners.

Manner 1: The terminal device extracts one piece of channel information (for example, first sub-channel information) from each piece of sub-channel information to obtain a plurality of pieces of first sub-channel information, and quantizes the plurality of pieces of first sub-channel information based on the second codebook to obtain the second channel state information. The plurality of pieces of first sub-channel information corresponds to a plurality of antenna ports, and different antenna ports in the plurality of antenna ports correspond to a same weight of different antenna subarrays.

For example, in S305, the terminal device determines 32 pieces of sub-channel information, and the 32 pieces of sub-channel information are *H*₁, *H*₂*,* ..., and *H*₃₂. Herein, H₁ = [h₀, h₁, h₂, h₃], H₂ = [h₄, h₅, h₆, h₇], ..., H₃₂ = [h₁₂₄, h₁₂₅, h₁₂₆, h₁₂₇], h₀, h₄, ..., h₁₂₄ and correspond to a same weight (namely, a weight 1) of different antenna subarrays.

Manner 2: The terminal device quantizes each piece of sub-channel information based on the first codebook to obtain a plurality of pieces of second sub-channel information, and quantizes the plurality of pieces of second sub-channel information based on the second codebook to obtain the second channel state information.

For example, a quantization codeword (for example, subP1) is selected from a defined codebook set v_{l1,m1} for each piece of sub-channel information to obtain the plurality of pieces of second sub-channel information (for example, each piece of second sub-channel information may also be understood as equivalent channel information of channel information included in the second sub-channel information). Each piece of sub-channel information may be quantized by selecting a same codeword, or may be quantized by selecting different codewords. When obtaining equivalent channel information corresponding to each piece of sub-channel information, the terminal device may quantize the plurality of pieces of equivalent channel information based on the second codebook, for example, by selecting a quantization codeword P from a defined codebook set v_{l,m} for each piece of equivalent channel information to obtain the second channel state information H_{eff,32port} obtained through quantization based on the plurality of pieces of equivalent channel information. ${H}_{eff , 32 port} = {H}_{128 port} ∗ \left[\begin{matrix}subP 1 & ⋯ & 0 \\ ⋮ & ⋱ & ⋮ \\ 0 & … & subP 32\end{matrix}\right]$ (5)

S307: The terminal device sends the second channel state information to the base station. Correspondingly, the base station receives the second channel state information.

In the foregoing technical solution, the terminal device may obtain, through reconstruction based on the obtained channel information (namely, the first channel state information) of the M antenna ports, a weighting vector having the highest matching degree with a channel of the terminal device and corresponding channel state information (namely, the second channel state information), to help improve a data transmission rate and improve communication performance.

An embodiment of this application provides a first communication method. FIG. 5 is a flowchart of the method. The method may be applied to the communication systems shown in FIG. 1A to FIG. 1C. For example, a base station in the method is the TRP in the communication systems shown in FIG. 1A to FIG. 1C, and a terminal device in the method is the terminal device in the communication systems shown in FIG. 1A to FIG. 1C. In this embodiment of this application, all optional steps are represented by dashed lines.

S501: The base station sends third configuration information to the terminal device. Correspondingly, the terminal device receives the third configuration information.

The third configuration information is used to configure M antenna ports, the M antenna ports are associated with a plurality of reference signal resources, a total quantity of reference signal ports corresponding to the plurality of reference signal resources is greater than or equal to M, and M is a positive integer. One reference signal resource may correspond to a plurality of reference signal ports, and the plurality of reference signal ports correspond to different antenna ports.

If the total quantity of reference signal ports corresponding to the plurality of reference signal resources is greater than M, it indicates that different reference signal ports corresponding to different reference signal resources correspond to a same antenna port. For example, for a correspondence between the antenna port and the reference signal port, refer to Table 2. It can be learned from Table 2 that a total quantity of reference signal ports corresponding to the reference signal resource 1 to the reference signal resource 5 is 160>128.

If the total quantity of reference signal ports corresponding to the plurality of reference signal resources is equal to M, it indicates that each of the plurality of reference signal resources corresponds to a different antenna port. For example, for a correspondence between the antenna port and the reference signal port, refer to Table 1. It can be learned from Table 1 that a total quantity of reference signal ports corresponding to the reference signal resource 1 to the reference signal resource 5 is 128=M.

Optionally, when M=128, a base station may further configure, for the terminal device, a reference signal resource whose quantity of reference signal ports is greater than 32. For example, Table 10 is an example in which a quantity of reference signal ports corresponding to a reference signal resource is greater than 32.

**Table 10**

| | Reference signal resource 1 | Reference signal resource 2 |
|---|---|---|
| Reference signal port numbers | #0 to #63 | #0 to #63 |
| Antenna port numbers | #3000 to #3063 | #3064 to #3127 |

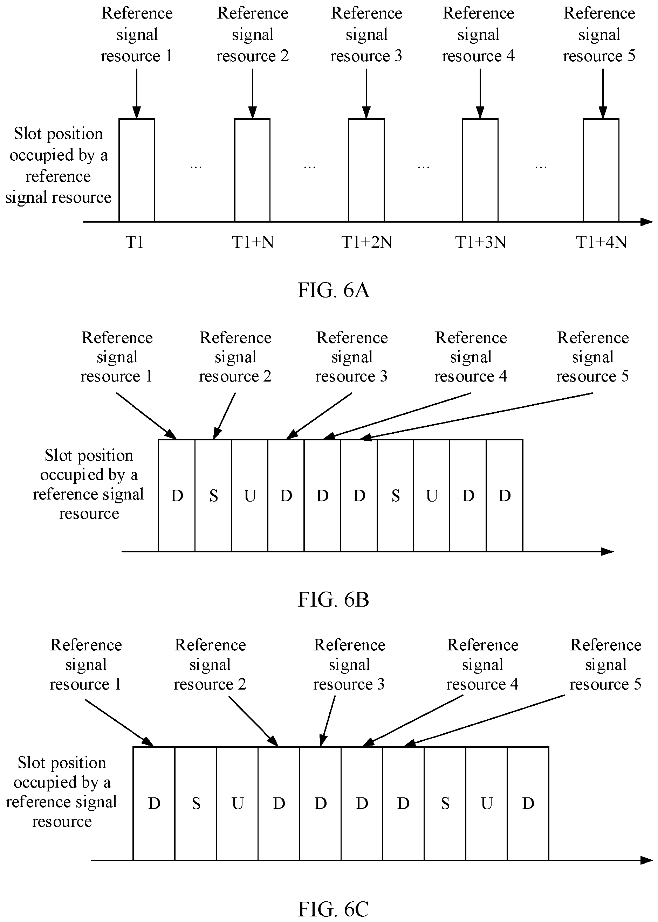

Optionally, different reference signal resources in the plurality of reference signal resources occupy different slots. For example, the plurality of reference signal resources may be periodic reference signal resources. For example, the M reference signals are associated with five reference signal resources. For slots occupied by the five reference signal resources, for example, refer to FIG. 6A, where N is a sending periodicity of a periodic reference signal resource.

Alternatively, the plurality of reference signal resources may be a plurality of reference signal resources that occupy consecutive downlink slots. For example, the M reference signals are associated with five reference signal resources. For slots occupied by the five reference signal resources, refer to FIG. 6B, where D is a downlink (downlink) slot, U is an uplink (uplink) slot, and S is a special frame (special frame).

Optionally, the base station may further configure, based on the slot occupied by the reference signal resource, antenna ports corresponding to each reference signal resource. For example, a reference signal resource 2 and a reference signal resource 3 occupy two adjacent downlink slots, and there is an uplink slot or an S slot between the two downlink slots. The base station may configure some reference signal ports in the reference signal resource 2 and the reference signal resource 3 to correspond to a same antenna port. For example, the M reference signal resources are associated with five reference signal resources. For slots occupied by the five reference signal resources, for example, refer to FIG. 6C. For a correspondence between reference signal ports and antenna ports corresponding to the five reference signal resources, refer to Table 11.

**Table 11**

| | Reference signal resource 1 | Reference signal resource 2 | Reference signal resource 3 | Reference signal resource 4 | Reference signal resource 5 |
|---|---|---|---|---|---|
| Reference signal port numbers | #0 to #31 | #0 to #31 | #0 to #31 | #0 to #31 | #0 to #31 |
| Antenna port numbers | #3000 to #3031 | #3032 to #3063 | #3048 to #3079 | #3064 to #3095 | #3096 to #3127 |

In Table 11, in the reference signal resource 2 and the reference signal resource 3, there are reference signal ports corresponding to a same antenna port.

S502: The base station sends, to the terminal device through the M antenna ports, reference signals corresponding to the plurality of reference signal resources. Correspondingly, the terminal device receives the reference signals corresponding to the plurality of reference signal resources.

The base station may send, in a slot occupied by each reference signal resource, reference signals through antenna ports corresponding to the reference signal resource. A combination of FIG. 6A and Table 2 is used as an example. The base station sends, at a moment T through antenna ports with antenna port numbers ranging from #3000 to #3031, reference signals corresponding to the reference signal resource 1, sends, after an interval of duration N (namely, T+N) through antenna ports with antenna port numbers ranging from #3024 to #3055, reference signals corresponding to the reference signal resource 2, ..., and sends, after an interval of duration N (namely, T+4N) through antenna ports with antenna port numbers ranging from #3096 to #3127, reference signals corresponding to reference signal resource 5.

Correspondingly, the terminal device receives, at the moment T, the reference signals corresponding to the antenna ports with antenna port numbers ranging from #3000 to #3031, receives, after the interval of duration N (namely, T+N), the reference signals corresponding to the antenna ports with antenna port numbers ranging from #3024 to #3055, ..., and receives, at T+4N, the reference signals corresponding to the antenna port with antenna port numbers ranging from #3096 to #3127.

S503: The terminal device determines third channel state information based on the reference signals corresponding to the plurality of reference signal resources.

For example, the plurality of reference signal resources are periodic reference signal resources. The terminal device obtains corresponding channel information at the moment T (for example, a slot T1) based on the reference signals corresponding to the antenna ports with antenna port numbers ranging from #3000 to #3031, where the channel information corresponding to the slot T1 is, for example, H_{T1} = [h_{t1,0}, h_{t1,1}, ... , h_{t1,30}, h_{t1,31}]; obtains corresponding channel information at T+N (for example, a slot T2) based on the reference signals corresponding to the antenna ports with antenna port numbers ranging from 3024 to #3055, where the channel information corresponding to the slot T2 is, for example, H_{T2} = [h_{t2,0}, h_{t2,1}, ..., h_{t2,30}, h_{t2,31}]; ...; and obtains corresponding channel information at T+4N (for example, a slot T5) based on the reference signals corresponding to the antenna ports with antenna port numbers ranging from 3096 to #3127, where the channel information corresponding to the slot T5 is, for example, H_{T5} = [h_{t5,0}, h_{t5,1}, ... , h_{t5,30}, h_{t5,31}].

Because of a non-ideal factor of an intermediate radio frequency device, a random phase difference may exist when a same antenna port sends reference signals in different slots, and phase compensation needs to be performed on channels in different slots. For example, when obtaining channel information corresponding to five slots, the terminal device may calculate a phase difference corresponding to adjacent slots, for example, calculate a phase difference Δθ1 between the slot T1 and the slot T2, a phase difference Δθ2 between a slot T3 and the slot T2, a phase difference Δθ3 between a slot T4 and the slot T3, and a phase difference Δθ4 between the slot T5 and the slot T4, calculate channel phase differences of a same antenna port in different slots, and average channel phase differences of a plurality of same antenna ports. For example, refer to formulas 6 to 9: $Δθ 1 = \frac{1}{8} \left({\sum }_{i = \left\{0,1,…,7\right\}} phase \left({h}_{t 1,24 + i}∗conj\left({h}_{t 2 , i}\right)\right)\right)$ (6) $Δθ 2 = \frac{1}{8} \left({\sum }_{i = \left\{0,1,…,7\right\}} phase \left({h}_{t 2 , 24 + i}∗conj\left({h}_{t 3 , i}\right)\right)\right)$ (7) $Δθ 3 = \frac{1}{8} \left({\sum }_{i = \left\{0,1,…,7\right\}} phase \left({h}_{t 3,24 + i}∗conj\left({h}_{t 4 , i}\right)\right)\right)$ (8) $Δθ 4 = \frac{1}{8} \left({\sum }_{i = \left\{0,1,…,7\right\}} phase \left({h}_{t 4,24 + i}∗conj\left({h}_{t 5 , i}\right)\right)\right)$ (9)

After obtaining the channel phase difference between the adjacent slots, the terminal device may perform phase alignment on channel information corresponding to antenna ports corresponding to different slots, for example, perform, based on Δθ1, phase compensation on channel information corresponding to all antenna ports corresponding to the slot T2, perform, based on Δθ1 + Δθ2, phase compensation on channel information corresponding to all antenna ports corresponding to the slot T3, ..., and perform, based on Δθ1 + Δθ2 + Δθ3 + Δθ4, phase compensation on channel information corresponding to all antenna ports corresponding to the slot T3 to obtain the third channel state information H₁₂₈ₚₒᵣₜ. For example, for the third channel state information, refer to formula 10. $\begin{matrix}{H}_{128 port} = \left[{h}_{0},{h}_{1}…{h}_{127}\right] \\ = \left[\begin{matrix}{h}_{t 1,0} , {h}_{t 1,1} , … , {h}_{t 1,30} , {h}_{t 1,31} , \\ {h}_{t 2,8} {e}^{jΔθ 1} , {h}_{t 2,9} {e}^{jΔθ 1} … , {h}_{t 2,31} {e}^{jΔθ 2} , \\ … \\ {h}_{t 5,8} {e}^{j \left(Δθ1+Δθ2+Δθ3+Δθ4\right)} , {h}_{t 5,9} {e}^{j \left(Δθ1+Δθ2+Δθ3+Δθ4\right)} … , {h}_{t 5,31} {e}^{j \left(Δθ1+Δθ2+Δθ3+Δθ4\right)}\end{matrix}\right]\end{matrix}$ (10)

S504: The terminal device sends the third channel state information to the base station. Correspondingly, the base station receives the third channel state information.

Optionally, the base station may further send fourth configuration information to the terminal device, to configure a third codebook, where a quantity of antenna ports corresponding to the third codebook is equal to M. The terminal device may quantize channel state information of all the antenna ports based on the third codebook. That is, channel information of all antenna ports obtained by combining a plurality of pilot resources is quantized, and quantized values are fed back to the base station.

In the foregoing technical solution, the M antenna ports are associated with the plurality of reference signal resources, so that channel state information measurement of an excessively large quantity of ports can be implemented, and channel state information measurement of low complexity can be implemented.

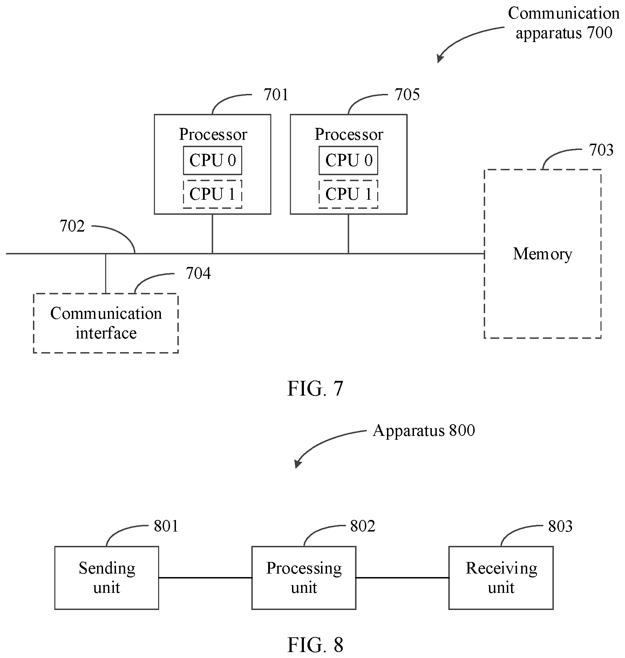

FIG. 7 is a diagram of a structure of a communication apparatus according to an embodiment of this application. The communication apparatus 700 may be the terminal device in the embodiment shown in any one of FIG. 3 or FIG. 5 or a circuit system of the terminal device, and is configured to implement the method corresponding to the terminal device in the foregoing method embodiments. Alternatively, the communication apparatus 700 may be the base station in the embodiment shown in any one of FIG. 3 or FIG. 5 or a circuit system of the base station, and is configured to implement the method corresponding to the base station in the foregoing method embodiments. The circuit system is, for example, a chip system. In this embodiment of this application, an example in which the communication apparatus 700 is configured to implement the method corresponding to the terminal device in the foregoing method embodiments is used.

The communication apparatus 700 includes at least one processor 701. The processor 701 may be configured to perform internal processing of the apparatus, to implement a specific control processing function. Optionally, the processor 701 includes instructions. Optionally, the processor 701 may store data. Different processors may be independent components, may be located at different physical locations, or may be located on different integrated circuits. Optionally, different processors may be integrated into one or more processors, for example, integrated into one or more integrated circuits.

Optionally, the communication apparatus 700 includes one or more memories 703, configured to store instructions. Optionally, the memory 703 may further store data. The processor 701 and the memory 703 may be separately disposed, or may be integrated together.

Optionally, the communication apparatus 700 includes a communication line 702 and at least one communication interface 704. The memory 703, the communication line 702, and the communication interface 704 are all optional, and therefore are all represented by dashed lines in FIG. 7.

Optionally, the communication apparatus 700 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 700 through the antenna. The transceiver may include a transmitter (transmitter) and a receiver (receiver). For example, the transmitter may be configured to generate a radio frequency (radio frequency) signal based on a baseband signal, and the receiver may be configured to convert the radio frequency signal into the baseband signal. Optionally, the communication apparatus 700 may include a transmitter but not a receiver. Alternatively, the communication apparatus 700 may include a receiver but not a transmitter. This may specifically depend on whether the foregoing solution performed by the communication apparatus 700 includes a sending action and a receiving action.

The processor 701 may include a general-purpose central processing unit (central processing unit, CPU), a microprocessor, an application specific integrated circuit (application specific integrated circuit, ASIC), or one or more integrated circuits configured to control program execution of solutions of this application.

The communication line 702 may include a path, to transfer information between the foregoing components.

The communication interface 704, applicable to any transceiver-type apparatus, is configured to communicate with another device or a communication network like the Ethernet, a radio access network (radio access network, RAN), a wireless local area network (wireless local area network, WLAN), or a wired access network.

The memory 703 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a Blu-ray optical disc, or the like), a magnetic disk storage medium or another magnetic storage device, or any other medium capable of carrying or storing expected program code in a form of instructions or data structures and capable of being accessed by a computer, but is not limited thereto. The memory 703 may exist independently and is connected to the processor 701 through the communication line 702. Alternatively, the memory 703 may be integrated with the processor 701.

The memory 703 is configured to store computer-executable instructions for performing the solutions in this application, and the processor 701 controls execution. The processor 701 is configured to execute the computer-executable instructions stored in the memory 703, to implement the steps performed by the terminal device in the embodiment shown in any one of FIG. 3 or FIG. 5.

Optionally, the computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

During specific implementation, in an embodiment, the communication apparatus 700 may include a plurality of processors, for example, the processor 701 and the processor 705 shown in FIG. 7. Each of the processors may be a single-core (single-CPU) processor, or may be a multi-core (multi-CPU) processor. The processor herein may be one or more devices, circuits, and/or processing cores configured to process data (for example, computer program instructions).

Optionally, the communication apparatus 700 is configured to perform an action performed by the terminal device in any embodiment shown in FIG. 3 or FIG. 5, and the communication apparatus 700 is configured to perform the following solutions.

The communication interface 704 is configured to: receive first configuration information used to configure M antenna ports, and receive reference signals corresponding to the M antenna ports.

The processor 701 is configured to: obtain first channel state information based on the reference signals corresponding to the M antenna ports; and determine a plurality of pieces of sub-channel information based on the first channel state information, and determine second channel state information based on the plurality of pieces of sub-channel information.

The communication interface 704 is further configured to send the second channel state information or third channel state information.

It should be understood that a specific process in which the modules perform the foregoing corresponding process is described in detail in the foregoing method embodiments. For brevity, details are not described herein again.

When the apparatus shown in FIG. 7 is a chip, for example, a chip of the terminal device, the chip includes the processor 701 (which may further include the processor 705), the communication line 702, and the communication interface 704. Optionally, the chip may include the memory 703. Specifically, the communication interface 704 may be an input interface, a pin, a circuit, or the like. The memory 703 may be a register, a cache, or the like. The processor 701 and the processor 705 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 8 is a diagram of an apparatus. The apparatus 800 may be the terminal device in the foregoing method embodiments, or a chip in the terminal device. Alternatively, the apparatus 800 may be the base station in the foregoing method embodiments, or may be a chip in the base station. In this embodiment of this application, an example in which the apparatus 800 may be the terminal device in the foregoing method embodiments or the chip in the terminal device is used. The apparatus 800 includes a sending unit 801, a processing unit 802, and a receiving unit 803.

It should be understood that the apparatus 800 may be configured to implement the steps performed by the terminal device in the communication method in embodiments of this application. For related features, refer to any embodiment shown in any one of FIG. 3 or FIG. 5. Details are not described herein again.

Optionally, functions/implementation processes of the sending unit 801, the receiving unit 803, and the processing unit 802 in FIG. 8 may be implemented by the processor 701 in FIG. 7 by invoking the computer-executable instructions stored in the memory 703. Alternatively, the function/the implementation process of the processing unit 802 in FIG. 8 may be implemented by the processor 701 in FIG. 7 by invoking the computer-executable instructions stored in the memory 703, and the functions/the implementation processes of the sending unit 801 and the receiving unit 803 in FIG. 8 may be implemented by the communication interface 704 in FIG. 7. For example, the sending unit 801 and the receiving unit 803 may be integrated into one transceiver unit. The transceiver unit may be, for example, the communication interface 704 in FIG. 7, or the transceiver in the communication interface 704.

Optionally, the apparatus 800 is configured to perform an action performed by the terminal device in any embodiment shown in FIG. 3 or FIG. 5. The apparatus 800 is configured to perform the following solutions.

The receiving unit 803 is configured to receive first configuration information used to configure M antenna ports, and receive reference signals corresponding to the M antenna ports.

The processing unit 802 is configured to: obtain first channel state information based on the reference signals corresponding to the M antenna ports; and determine a plurality of pieces of sub-channel information based on the first channel state information, and determine second channel state information based on the plurality of pieces of sub-channel information.

The sending unit 801 is further configured to send the second channel state information or third channel state information.

Optionally, when the apparatus 800 is a chip or a circuit, the functions/the implementation processes of the sending unit 801 and the receiving unit 803 may alternatively be implemented by a pin, a circuit, or the like.

This application further provides a computer-readable storage medium. The computer-readable storage medium stores a computer program or instructions. When the computer program or the instructions are run, the method performed by the terminal device or the base station in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of software product. The computer software product is stored in a storage medium, and includes several instructions for instructing a computer device (which may be a personal computer, a server, a base station, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the terminal device or the base station in any one of the foregoing method embodiments.

An embodiment of this application further provides a processing apparatus, including a processor and an interface. The processor is configured to perform the method performed by the terminal device or the base station in any one of the foregoing method embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state disk, SSD)), or the like.

Various illustrative logical units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Alternatively, the storage medium may be integrated into a processor. The processor and the storage medium may be disposed in an ASIC, and the ASIC may be disposed in a terminal device or a base station. Optionally, the processor and the storage medium may be disposed in different parts of a terminal device or a base station.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device and/or the base station may perform a part or all steps in embodiments of this application. These steps or operations are merely examples. In embodiments of this application, other operations or variations of various operations may be further performed. In addition, the steps may be performed in a sequence different from a sequence presented in embodiments of this application, and not all operations in embodiments of this application need to be performed.

## Claims

1. A communication method, wherein the method comprises:
receiving first configuration information, wherein the first configuration information is used to configure M antenna ports, the M antenna ports are associated with K reference signal resources, both M and K are integers greater than 1, and each of the K reference signal resources corresponds to a same quantity of antenna ports;
receiving reference signals corresponding to the K reference signal resources, and obtaining first channel state information corresponding to the K reference signal resources; and
sending the first channel state information.

2. The method according to claim 1, wherein that each of the K reference signal resources corresponds to the same quantity of antenna ports comprises:
each reference signal resource corresponds to M1 antenna ports, wherein M1=M/K, and M1 is a positive integer.

3. The method according to claim 2, wherein the M antenna ports are comprised in N port groups, each of the N port groups comprises N1 antenna ports, the N1 antenna ports have consecutive antenna port numbers, and N1 is a positive integer.

4. The method according to claim 3, wherein
the N port groups comprise a first port group, the first port group comprises K antenna ports, the K antenna ports correspond to reference signal ports with a same number, and the K antenna ports correspond to the K reference signal resources; or
each of the N1 antenna ports corresponds to a different reference signal resource, wherein N1=K; or
the N port groups comprise a second port group, different antenna ports in the second port group correspond to reference signal ports with different numbers, and the different antenna ports in the second port group correspond to a same reference signal resource; or
the N1 antenna ports correspond to a same reference signal resource, wherein M1/N1=c, and c is a positive integer; or
a j^{th} reference signal resource in the K reference signal resources corresponds to the N1 antenna ports with antenna port numbers ranging from (j-1)*N1 to j*N1-1, wherein 1≤j≤K, and j is an integer.

5. The method according to any one of claims 1 to 4, wherein the method further comprises:
receiving second configuration information, wherein the second configuration information is used to configure a codebook, the codebook is associated with the K reference signal resources, and a quantity of antenna ports corresponding to the codebook is M.

6. The method according to claim 5, wherein the codebook comprises a first codebook and/or a second codebook, the first codebook is associated with at least one of the K reference signal resources, and the second codebook is associated with the K reference signal resources.

7. A communication method, wherein the method comprises:
receiving first configuration information, wherein the first configuration information is used to configure M antenna ports, the M antenna ports are associated with one or more reference signal resources, and M is a positive integer;
receiving reference signals corresponding to the M antenna ports, and obtaining first channel state information corresponding to the M antenna ports;
determining a plurality of pieces of sub-channel information based on the first channel state information, wherein the plurality of pieces of sub-channel information corresponds to the M antenna ports, and each piece of sub-channel information corresponds to a same quantity of antenna ports;
determining second channel state information based on the plurality of pieces of sub-channel information; and
sending the second channel state information.

8. The method according to claim 7, wherein the method further comprises:
receiving second configuration information, wherein the second configuration information is used to configure a first codebook and a second codebook;
determining the plurality of pieces of sub-channel information based on the first channel state information comprises: determining the plurality of pieces of sub-channel information based on the first codebook and the first channel state information, wherein a quantity of antenna ports corresponding to each piece of sub-channel information is the same as a quantity of antenna ports corresponding to the first codebook; and
determining the second channel state information based on the plurality of pieces of sub-channel information comprises:
quantizing the plurality of pieces of sub-channel information based on the second codebook to obtain the second channel state information.

9. The method according to claim 8, wherein quantizing the plurality of pieces of sub-channel information based on the second codebook to obtain the second channel state information comprises:
obtaining first sub-channel information from each of the plurality of pieces of sub-channel information to obtain a plurality of pieces of first sub-channel information, wherein the plurality of pieces of first sub-channel information correspond to a plurality of antenna ports, and different antenna ports in the plurality of antenna ports correspond to a same weight of different antenna subarrays; and
quantizing the plurality of pieces of first sub-channel information based on the second codebook to obtain the second channel state information.

10. The method according to claim 8, wherein the method further comprises:
quantizing each of the plurality of pieces of sub-channel information based on the first codebook to obtain a plurality of pieces of second sub-channel information; and
quantizing the plurality of pieces of sub-channel information based on the second codebook to obtain the second channel state information comprises: quantizing the plurality of pieces of second sub-channel information based on the second codebook to obtain the second channel state information.

11. The method according to any one of claims 8 to 10, wherein the quantity of antenna ports corresponding to the first codebook is Q1, a quantity of antenna ports corresponding to the second codebook is Q2, Q1*Q2*P=M, P indicates a quantity of polarized antennas, and Q1, Q2, and P are positive integers.

12. The method according to any one of claims 8 to 11, wherein the M antenna ports are comprised in N port groups; and
the N port groups comprise a first port group, different antenna ports in the first port group correspond to reference signal ports with a same number, and the different antenna ports in the first port group correspond to different reference signal resources; or
the N port groups comprise a second port group, different antenna ports in the second port group correspond to reference signal ports with different numbers, and the different antenna ports in the second port group correspond to a same reference signal resource.

13. The method according to claim 12, wherein the N port groups correspond to N antenna subarrays, and different ports in a same port group correspond to different weights of a same antenna subarray.

14. The method according to claim 8, wherein the M antenna ports correspond to K reference signal resources, the first codebook is used to quantize channel state information corresponding to each of the K reference signal resources, the second codebook is used to quantize channel state information corresponding to the K reference signal resources, and K is a positive integer.

15. The method according to claim 14, wherein the quantity of antenna ports corresponding to the first codebook is Q1, a quantity of antenna ports corresponding to the second codebook is Q2, Q2=K*Q1, and Q1 and Q2 are less than or equal to M.

16. A communication method, wherein the method comprises:
receiving third configuration information, wherein the third configuration information is used to configure M antenna ports, the M antenna ports are associated with a plurality of reference signal resources, a total quantity of reference signal ports corresponding to the plurality of reference signal resources is greater than or equal to M, and M is a positive integer;
receiving reference signals corresponding to the plurality of reference signal resources, and determining third channel state information of the M antenna ports; and
sending the third channel state information.

17. The method according to claim 16, wherein different reference signal resources in the plurality of reference signal resources occupy different slots.

18. The method according to claim 17, wherein the N reference signal resources comprise a first reference signal resource and a second reference signal resource, and a first reference signal port comprised in the first reference signal resource and a second reference signal port comprised in the second reference signal resource correspond to a same antenna port.

19. The method according to claim 18, wherein receiving the reference signals corresponding to the plurality of reference signal resources, and determining the third channel state information of the M antenna ports comprise:
receiving reference signals corresponding to the first reference signal resource and the second reference signal resource, and obtaining fourth channel state information corresponding to the first reference signal resource and fifth channel state information corresponding to the second reference signal resource;
determining a channel phase difference based on the fourth channel state information and the fifth channel state information; and
performing phase compensation on the fifth channel state information based on the channel phase difference to obtain the third channel state information.

20. The method according to any one of claims 17 to 19, wherein the method further comprises:
receiving fourth configuration information, wherein the fourth configuration information is used to configure a third codebook, and a quantity of antenna ports corresponding to the third codebook is equal to M.

21. A communication apparatus, comprising a module for performing the method according to any one of claims 1 to 6, or comprising a module for performing the method according to any one of claims 7 to 15, or comprising a module for performing the method according to any one of claims 16 to 20.

22. A communication apparatus, comprising a processor and a memory, wherein the memory is coupled to the processor, and the processor is configured to invoke computer instructions in the memory to perform the method according to any one of claims 1 to 6, or to perform the method according to any one of claims 7 to 15, or to perform the method according to any one of claims 16 to 20.

23. A computer-readable storage medium, wherein the computer-readable storage medium stores computer executable instructions, and when the computer executable instructions are invoked by the computer, the method according to any one of claims 1 to 6 is performed, or the method according to any one of claims 7 to 15 is performed, or the method according to any one of claims 16 to 20 is performed.

24. A computer program product, wherein the computer program product comprises a computer program, and when the computer program is run on a computer, the computer is enabled to perform the method according to any one of claims 1 to 6, or the computer is enabled to perform the method according to any one of claims 7 to 15, or the computer is enabled to perform the method according to any one of claims 16 to 20.

25. A computer program, comprising program code, wherein when the computer runs the program code, the program code performs the method according to any one of claims 1 to 6, or the program code performs the method according to any one of claims 7 to 15, or the program code performs the method according to any one of claims 16 to 20.

26. A chip, wherein the chip is coupled to a memory, and is configured to read and execute program instructions stored in the memory, to implement the method according to any one of claims 1 to 6, or to implement the method according to any one of claims 7 to 15, or to implement the method according to any one of claims 16 to 20.
